# EUROPÄISCHE PATENTSCHRIFT

(11) **EP 3 006 296 B1**
(45) Veröffentlichungstag und Bekanntmachung des Hinweises auf die Patenterteilung: **29.09.2021**
(21) Anmeldenummer: 15002258.0
(22) Anmeldetag: 30.07.2015
(51) Int. Cl.: B60W 30/14, B60W 50/14

(54) **VERFAHREN UND VORRICHTUNG ZUR UNTERSTÜTZUNG EINES FAHRERS EINES FAHRZEUGS, INSBESONDERE EINES NUTZFAHRZEUGS**
DEVICE AND METHOD FOR SUPPORTING A DRIVER OF A VEHICLE, IN PARTICULAR A COMMERCIAL VEHICLE
PROCÉDÉ ET DISPOSITIF D'ASSISTANCE D'UN CONDUCTEUR D'UN VÉHICULE AUTOMOBILE, EN PARTICULIER D'UN VÉHICULE UTILITAIRE

(30) Priorität: 07.10.2014 DE 102014014940
(43) Veröffentlichungstag der Anmeldung: 13.04.2016
(73) Patentinhaber: MAN Truck & Bus SE, 80995 München (DE)
(72) Erfinder: Hoffmann, Guido, 82538 Geretsried (DE)
(74) Vertreter: Liebl, Thomas

(56) Entgegenhaltungen:
- EP-A2- 2 161 699
- DE-A1-102012 102 564
- DE-A1-102013 205 609
- DE-U1-202013 008 288
- US-A1- 2007 067 086
- US-A1- 2012 245 756
- US-A1- 2013 110 367

## Beschreibung

Die Erfindung betrifft ein Verfahren zur Unterstützung eines Fahrers eines Fahrzeugs, insbesondere eines Nutzfahrzeugs, nach dem Oberbegriff des Patentanspruches 1, eine Vorrichtung zur Unterstützung eines Fahrers eines Fahrzeugs, insbesondere eines Nutzfahrzeugs, nach dem Oberbegriff des Patentanspruches 6 sowie ein Fahrzeug, insbesondere ein Nutzfahrzeug, zur Durchführung des Verfahrens und/oder mit der Vorrichtung nach Patentanspruch 11.

Moderne Fahrzeuge, insbesondere Nutzfahrzeuge, weisen regelmäßig ein Geschwindigkeits-Regelsystem auf, mittels dem die Geschwindigkeit des Fahrzeugs selbsttätig bzw. automatisch in Abhängigkeit geregelt werden kann. Das Geschwindigkeits-Regelsystem weist dabei üblicherweise eine durch den Fahrer betätigbare Eingabeeinrichtung auf, in die der Fahrer die einzuhaltende Geschwindigkeit eingibt. Die Geschwindigkeit des Fahrzeugs wird dann mittels des Geschwindigkeits-Regelsystems derart geregelt, dass die eingegebene Geschwindigkeit von dem Fahrzeug eingehalten wird.

Zudem ist es auch bekannt, die Geschwindigkeit des Fahrzeugs mittels des Geschwindigkeits-Regelsystems derart zu regeln, dass das Fahrzeug einen definierten Abstand zu einem unmittelbar vor dem Fahrzeug auf der gleichen Fahrspur fahrenden Vorderfahrzeug einhält. Der definierte Abstand wird dabei üblicherweise durch den Fahrer des Fahrzeugs in eine geeignete Eingabeeinrichtung eingegeben.

Bei den bekannten Geschwindigkeits-Regelsystemen ist es jedoch von Nachteil, dass bei der Regelung der Fahrzeuggeschwindigkeit die für das Fahrzeug geltenden Geschwindigkeitsvorschriften nicht berücksichtigt werden. Dies führt regelmäßig dazu, dass bei der Verwendung des Geschwindigkeits-Regelsystems die für das Fahrzeug geltenden Geschwindigkeitsvorschriften nicht eingehalten werden, ohne dass der Fahrer des Fahrzeugs dies bemerkt bzw. mitbekommt.

Die DE 10 2013 205 609 A1 offenbart ein Verfahren zur Geschwindigkeitssteuerung eines Fahrzeugs, bei dem zunächst eine durch einen Fahrer vorgegebene Geschwindigkeit und anschließend eine erlaubte Höchstgeschwindigkeit im Bereich des Kraftfahrzeugs erfasst wird. Anschließend wird die Fahrgeschwindigkeit des Kraftfahrzeugs auf die vorgegebene Geschwindigkeit gesteuert und eine Warnung ausgegeben, falls die vorgegebene Geschwindigkeit größer als die erlaubte Höchstgeschwindigkeit ist. Grundsätzlich wird hier die Einsteuerung der zulässigen Höchstgeschwindigkeit durch den Fahrer freigegeben. Anders verhält es sich jedoch, wenn die Geschwindigkeit des Kraftfahrzeugs die vorbestimmte Geschwindigkeit übersteigt, beispielsweise wegen eines Gefälles, auf dem sich das Kraftfahrzeug bergab bewegt. In diesem Fall wird die Geschwindigkeit des Kraftfahrzeugs unmittelbar, das heißt ohne Ausgabe einer Warnung und ohne Abfrage einer Fahrerreaktion auf den vorbestimmten Wert geregelt. Die erlaubte Höchstgeschwindigkeit kann mittels eines optischen Schilderkennungssystems erfasst werden. Ferner kann eine Geschwindigkeit eines vorausfahrenden Fahrzeugs bestimmt werden, wobei, falls dieses einen vorbestimmten Abstand zum Kraftfahrzeug unterschreitet, die Fahrgeschwindigkeit des Kraftfahrzeugs auf die Geschwindigkeit des vorausfahrenden Fahrzeugs eingeregelt wird, falls diese kleiner als die vorgegebene Höchstgeschwindigkeit ist.

Die EP 2 161 699 A2 offenbart eine Einrichtung zum Überwachen einer Überschreitung einer vorausliegenden vorgegebenen Höchstgeschwindigkeit, wobei diese Einrichtung jedoch lediglich die Ausgabe einer Bremsempfehlung veranlasst, und zwar so rechtzeitig, dass die Ist-Geschwindigkeit mit einem vorgebbaren Verzögerungsverlauf auf die ab einer vorausliegenden definierten Position vorgegebene Höchstgeschwindigkeit reduzierbar ist. Sollte das Fahrzeug mit dem vorgebbaren Verzögerungsverlauf nicht mehr auf die vorgegebene Höchstgeschwindigkeit abbremsbar sein, wird anstatt der Bremsempfehlung ein Warnsignal ausgegeben.

Die DE 10 2012 102 564 A1 offenbart eine Fahrtunterstützungsvorrichtung, bei der ein Tempolimit erfasst und überwacht wird. Konkret soll dabei, wenn ein Tempolimit erfasst worden ist, die Fahrtregelungseinheit in einen Stand-by-Modus geschaltet werden, in dem die Fahrtregelungseinheit die gesetzte Fahrzeuggeschwindigkeit und das Tempolimit in blinkenden Zuständen anzeigt, so dass die Geschwindigkeiten miteinander verglichen werden können. Nach Ablauf einer vorgegebenen Zeitdauer für den Stand-by-Modus wird, sofern der Fahrer nicht innerhalb dieser Zeitdauer ein gegenteiliges Signal gesetzt hat, der Wert der vorgegebenen Fahrzeuggeschwindigkeit auf den Wert des Tempolimits umgeschaltet.

Die US 2012/0245756 A1 weist in Verbindung mit einem Fahrerassistenzsystem ein Warnmodul auf, das ausgebildet ist, um zu bestimmen, ob die Fahrzeuggeschwindigkeit einen Geschwindigkeitsgrenzwert einer vorausliegenden Fahrstrecke überschreitet. Hierbei nutzt das System Daten einer GPS-Einheit.

Es ist daher Aufgabe der Erfindung, ein Verfahren und eine Vorrichtung zur Unterstützung eines Fahrzeugs, insbesondere eines Nutzfahrzeugs, bereitzustellen, mittels denen die Einhaltung der geltenden Geschwindigkeitsvorschriften auf einfache und zuverlässige Weise sichergestellt wird.

Diese Aufgabe wird durch die Merkmale der unabhängigen Ansprüche gelöst. Bevorzugte Weiterbildungen sind in den Unteransprüchen offenbart.

Gemäß Anspruch 1 wird ein Verfahren zur Unterstützung eines Fahrers eines Fahrzeugs, insbesondere eines Nutzfahrzeugs, vorgeschlagen, wobei ein Geschwindigkeits-Regelsystem vorgesehen ist, mittels dem die Geschwindigkeit des Fahrzeugs selbsttätig geregelt und/oder eingestellt werden kann. Das Geschwindigkeits-Regelsystem ist datenübertragend mit einer Geschwindigkeits-Informationen über einen aktuell von dem Fahrzeug befahrenen Fahrstreckenabschnitt aufweisenden Informationseinrichtung gekoppelt. Mittels des Geschwindigkeits-Regelsystems wird dabei ermittelt, ob das mittels des Geschwindigkeits-Regelsystems geregelte Fahrzeug auf dem Fahrstreckenabschnitt geltende Geschwindigkeitsvorschriften aktuell und/oder zukünftig einhält. Sofern das Fahrzeug die geltenden Geschwindigkeitsvorschriften nicht einhält, wird dann mittels des Geschwindigkeits-Regelsystems die Geschwindigkeit des Fahrzeugs unter Berücksichtigung der geltenden Geschwindigkeitsvorschriften selbsttätig geändert. Erfindungsgemäß wird, sofern mittels des Geschwindigkeits-Regelsystems die Geschwindigkeit des Fahrzeugs unter Berücksichtigung der geltenden Geschwindigkeitsvorschriften geändert wird, die Geschwindigkeit des Fahrzeugs mittels des Geschwindigkeits-Regelsystems unter Berücksichtigung des Energieverbrauchs und/oder des Bremsverschleißes des Fahrzeugs geändert.

Auf diese Weise wird die Einhaltung der geltenden Geschwindigkeitsvorschriften auf zuverlässige Weise sichergestellt, da, sofern die geltenden Geschwindigkeitsvorschriften nicht eingehalten werden, die Geschwindigkeit des Fahrzeugs selbsttätig bzw. automatisch geändert wird und/oder dem Fahrer mitgeteilt wird, dass die geltenden Geschwindigkeitsvorschriften nicht eingehalten werden. Sofern die Geschwindigkeit des Fahrzeug mittels des Geschwindigkeits-Regelsystems selbsttätig bzw. automatisch geändert wird, werden die geltenden Geschwindigkeitsvorschriften dabei auf besonders zuverlässige und zudem auch komfortable Weise eingehalten.

Konkret kann eine geltende Geschwindigkeitsvorschrift beispielsweise die auf dem Fahrstreckenabschnitt maximal erlaubte Fahrzeuggeschwindigkeit sein. Sofern das Fahrzeug diese maximal erlaubte Fahrzeuggeschwindigkeit überschreitet, wird dann mittels des Geschwindigkeits-Regelsystems die Geschwindigkeit des Fahrzeugs zur Einhaltung dieser Geschwindigkeit selbsttätig geändert und/oder dem Fahrer mittels der Anzeigeeinrichtung angezeigt, dass das Fahrzeug die maximal erlaubte Fahrzeuggeschwindigkeit überschreitet.

Bevorzugt weist das Geschwindigkeits-Regelsystem eine durch den Fahrer betätigbare Eingabeeinrichtung auf, in die eine von den Fahrzeug einzuhaltende Geschwindigkeit eingegeben wird. Die Geschwindigkeit des Fahrzeugs kann dabei mittels des Geschwindigkeits-Regelsystems derart geregelt oder eingestellt werden, dass die eingegebene Geschwindigkeit zumindest in etwa von dem Fahrzeug eingehalten wird. So kann der Fahrer die von ihm gewünschte Geschwindigkeit auf einfache Weise einstellen. Sofern das Fahrzeug die geltenden Geschwindigkeitsvorschriften dann nicht einhält, wird, wie bereits erläutert, mittels des Geschwindigkeit-Regelsystems die Geschwindigkeit des Fahrzeugs unter Berücksichtigung der geltenden Geschwindigkeitsvorschriften selbsttätig geändert bzw. selbsttätig geändert und dem Fahrer mittels der Anzeigeeinrichtung angezeigt, dass das Fahrzeug die geltenden Geschwindigkeitsvorschriften nicht einhält. Konkret kann dem Fahrer mittels der Anzeigeeinrichtung dabei beispielsweise die aktuell geltende Geschwindigkeitsbeschränkung, insbesondere blinkend, mit einer definierten Signalfarbe, insbesondere rot, angezeigt werden. Alternativ kann dem Fahrer auch die eingegebene Geschwindigkeit, insbesondere blinkend, mit einer definierten Signalfarbe, insbesondere rot, angezeigt werden. Weiter alternativ kann die aktuell geltende Geschwindigkeitsbeschränkung auch mit einer definierten Frequenz abwechselnd mit der vom Fahrer eingegebenen Geschwindigkeit angezeigt werden. Bevorzugt wird dabei die aktuell geltende Geschwindigkeitsbeschränkung mit einer ersten definierten Signalfarbe, insbesondere grün, angezeigt und die vom Fahrer eingegebene Geschwindigkeit mit einer zweiten definierten Signalfarbe, insbesondere rot, angezeigt werden. Als weitere Alternative kann auch eine Textmeldung angezeigt werden, beispielsweise mit einer Aufforderung, die eingegebene Geschwindigkeit auf einen zulässigen Wert zu ändern.

Alternativ und/oder zusätzlich kann das Geschwindigkeits-Regelsystem auch eine Abstands-Messeinrichtung aufweisen, mittels der der Abstand des Fahrzeugs zu einem, insbesondere auf der gleichen Fahrspur fahrenden, vorausfahrenden Vorderfahrzeug gemessen wird. Die Geschwindigkeit des Fahrzeugs kann dabei mittels des Geschwindigkeits-Regelsystems derart geregelt und/oder eingestellt werden, dass das Fahrzeug zumindest in etwa mit einem definierten Abstand hinter dem Vorderfahrzeug fährt, wobei bevorzugt vorgesehen ist, dass das Geschwindigkeits-Regelsystem eine durch den Fahrer betätigbare Eingabeeinrichtung aufweist, in die der Abstand eingegeben wird. So kann ein gewünschter oder empfohlener Abstand zwischen dem Fahrzeug und dem Vorderfahrzeug auf zuverlässige und komfortable Weise eingehalten werden. Sofern das Fahrzeug die geltenden Geschwindigkeitsvorschriften dann nicht einhält, wird mittels des Geschwindigkeit-Regelsystems die Geschwindigkeit des Fahrzeugs unter Berücksichtigung der geltenden Geschwindigkeitsvorschriften selbsttätig geändert und/oder dem Fahrer mittels der Anzeigeeinrichtung angezeigt, dass das Fahrzeug die geltenden Geschwindigkeitsvorschriften nicht einhält. Konkret kann dem Fahrer mittels der Anzeigeeinrichtung dabei beispielsweise die aktuell geltende Geschwindigkeitsbeschränkung, insbesondere blinkend, mit einer definierten Signalfarbe, insbesondere rot, angezeigt werden. Alternativ kann dem Fahrer auch, insbesondere mittels einer Textmeldung, angezeigt werden, dass er das Geschwindigkeits-Regelsystem oder die Abstandsregelung des Geschwindigkeits-Regelsystems deaktivieren soll.

Konkret kann die Informationseinrichtung als Speichereinrichtung ausgebildet sein, in der Navigationsdaten gespeichert sind, wobei bevorzugt vorgesehen ist, dass die Informationseinrichtung als Navigationsgerät ausgebildet ist. Auf diese Weise können die Geschwindigkeits-Informationen besonders einfach ermittelt werden, da in modernen Fahrzeugen üblicherweise bereits eine derartige Speichereinrichtung, insbesondere ein Navigationsgerät, vorgesehen ist. Sofern das Fahrzeug nicht bereits eine derartige Speichereinrichtung aufweist, kann diese üblicherweise auch einfach nachgerüstet werden. Die Verwendung der Speichereinrichtung hat zudem den wesentlichen Vorteil, dass in dieser regelmäßig auch Geschwindigkeitsvorschriften gespeichert sind, die auf vor dem Fahrzeug liegenden Fahrstreckenbereichen gelten. So kann die Fahrzeuggeschwindigkeit rechtzeitig bzw. frühzeitig, insbesondere unter Einhaltung der bereits erwähnten Fahrzeugparameter, den geltenden Geschwindigkeitsvorschriften angepasst werden kann.

Alternativ und/oder zusätzlich kann die Informationseinrichtung auch als Verkehrsschild-Erkennungseinrichtung ausgebildet sein, mittels der auf, insbesondere in Fahrtrichtung vor dem Fahrzeug liegenden, Verkehrsschildern angezeigte Geschwindigkeits-Informationen erkannt und/oder erfasst werden, wobei bevorzugt vorgesehen ist, dass die Verkehrsschild-Erkennungseinrichtung wenigstens eine Kamera aufweist. Mittels der Verkehrsschild-Erkennungseinrichtung können beispielsweise geschwindigkeitsrelevante Ortseingangs- und Ortsausgangsbeschilderungen oder aber auch Baustellenbeschilderungen erkannt werden. Durch die Verwendung der Verkehrsschild-Erkennungseinrichtung werden die geltenden Geschwindigkeitsvorschriften besonders zuverlässig eingehalten, da mittels dieser alle dem Fahrer angezeigten Geschwindigkeits-Informationen erfasst werden. Die Erkennung der Geschwindigkeits-Informationen auf in Fahrtrichtung vor dem Fahrzeug liegenden Verkehrsschildern hat dabei, wie die bereits erwähnte Speichereinrichtung, den wesentlichen Vorteil, dass die Fahrzeuggeschwindigkeit rechtzeitig bzw. frühzeitig, insbesondere unter Einhaltung der bereits erwähnten Fahrzeugparameter, den geltenden Geschwindigkeitsvorschriften angepasst werden kann.

Zur Lösung der bereits erläuterten Aufgabe wird ferner eine Vorrichtung zur Unterstützung eines Fahrers eines Fahrzeugs, insbesondere eines Nutzfahrzeugs, beansprucht, wobei ein Geschwindigkeits-Regelsystem vorgesehen ist, mittels dem die Geschwindigkeit des Fahrzeugs selbsttätig geregelt und/oder eingestellt werden kann. Das Geschwindigkeits-Regelsystem ist datenübertragend mit einer Geschwindigkeits-Informationen über einen aktuell befahrenen Fahrstreckenabschnitt aufweisenden Informationseinrichtung gekoppelt. Mittels des Geschwindigkeits-Regelsystems kann dabei ermittelt werden, ob das mittels des Geschwindigkeits-Regelsystems geregelte Fahrzeug auf dem Fahrstreckenabschnitt geltende Geschwindigkeitsvorschriften aktuell und/oder zukünftig einhält. Sofern das Fahrzeug die geltenden Geschwindigkeitsvorschriften nicht einhält, kann dann mittels des Geschwindigkeits-Regelsystems die Geschwindigkeit des Fahrzeugs unter Berücksichtigung der geltenden Geschwindigkeitsvorschriften selbsttätig bzw. automatisch geändert werden. Erfindungsgemäß ist vorgesehen, dass, sofern mittels des Geschwindigkeits-Regelsystems die Geschwindigkeit des Fahrzeugs unter Berücksichtigung der geltenden Geschwindigkeitsvorschriften änderbar ist, die Geschwindigkeit des Fahrzeuges mittels des Geschwindigkeits-Regelsystems unter Berücksichtigung des Energieverbrauchs und/oder Bremsverschleißes des Fahrzeuges änderbar ist.

Die sich durch die erfindungsgemäße Vorrichtung und die darauf rückbezogenen Unteransprüche ergebenden Vorteile sind identisch mit den bereits gewürdigten Vorteilen des erfindungsgemäßen Verfahrens, so dass diese an dieser Stelle nicht wiederholt werden.

Des Weiteren wird auch ein Fahrzeug, insbesondere ein Nutzfahrzeug, zur Durchführung des erfindungsgemäßen Verfahrens und/oder mit der erfindungsgemäßen Vorrichtung beansprucht. Die sich hieraus ergebenden Vorteile sind ebenfalls identisch mit den Vorteilen des erfindungsgemäßen Verfahrens, so dass auch diese hier nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer schematischen Darstellung eine erste Verkehrssituation, in der die erfindungsgemäße Vorrichtung verwendet werden kann;
- Fig. 2: in einer Darstellung gemäß Fig. 1 eine zweite Verkehrssituation, in der die erfindungsgemäße Vorrichtung verwendet werden kann;
- Fig. 3: eine schematische Darstellung, anhand der der Aufbau und die Funktionsweise der erfindungsgemäßen Vorrichtung erläutert wird; und
- Fig. 4: ein Blockschaltdiagramm, anhand dem die Funktionsweise der erfindungsgemäßen Vorrichtung erläutert wird.

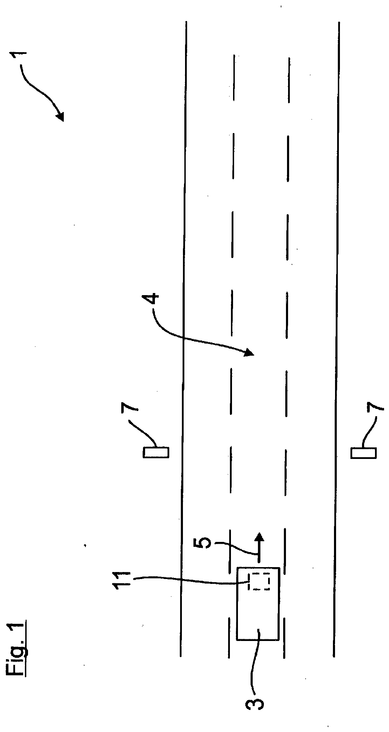

In Fig. 1 ist ein auf einem mehrspurigen, hier beispielhaft dreispurigen, Fahrstreckenabschnitt 1 fahrendes Fahrzeug 3 gezeigt. Das Fahrzeug 3 befindet sich dabei auf einer mittleren Fahrspur 4 des dreispurigen Fahrstreckenabschnitts 1 und bewegt sich mit einer definierten Geschwindigkeit in Fahrtrichtung 5. In Fahrtrichtung 5 gesehen, vor dem Fahrzeug 3 sind dem Fahrstreckenabschnitt 1 Verkehrsschilder 7 zugeordnet, mittels denen einem Fahrer des Fahrzeugs 3 angezeigt wird, dass, in Fahrtrichtung 5 gesehen, nach den Verkehrsschildern 7 eine geringere maximale Fahrzeuggeschwindigkeit erlaubt ist, als vor den Verkehrsschildern 7.

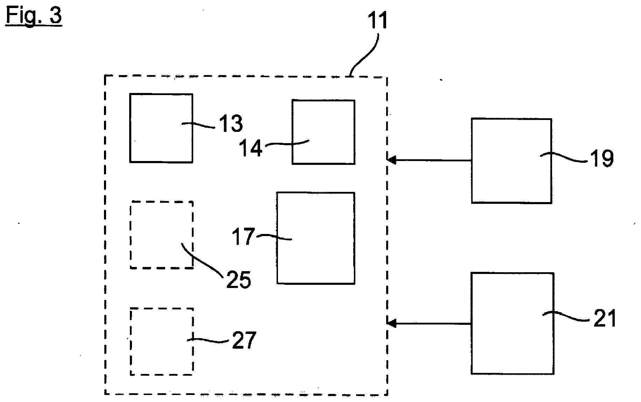

Wie in Fig. 1 weiter gezeigt ist, weist das Fahrzeug 3 ein mit gestrichelten Linien angedeutetes Geschwindigkeits-Regelsystem 11 auf, mittels dem die Geschwindigkeit des Fahrzeugs 3 selbsttätig bzw. automatisch geregelt werden kann. Gemäß Fig. 3 weist das Geschwindigkeits-Regelsystem 11, hier lediglich beispielhaft, eine durch den Fahrer betätigbare Eingabeeinrichtung 13 auf, in die der Fahrer des Fahrzeugs 3 eine von dem Fahrzeug 3 einzuhaltende Geschwindigkeit eingeben kann. Gibt der Fahrer des Fahrzeugs 3 eine Geschwindigkeit in die Eingabeeinrichtung 13 ein, regelt das Geschwindigkeits-Regelsystem 11 die Geschwindigkeit des Fahrzeugs 3 derart, dass die eingegebene Geschwindigkeit zumindest in etwa von dem Fahrzeug 3 eingehalten wird.

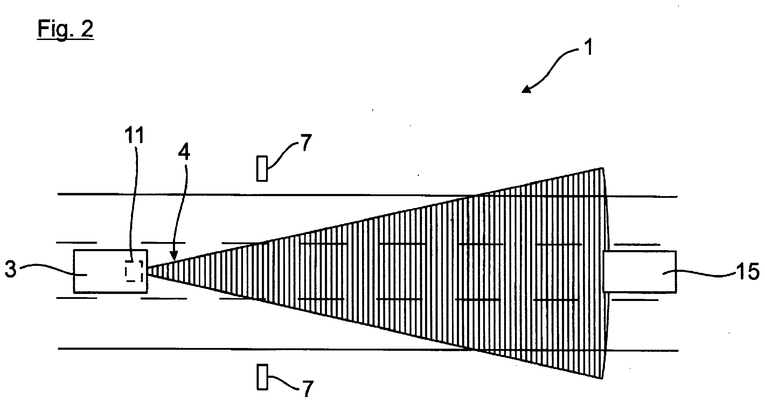

Des Weiteren weist das Geschwindigkeits-Regelsystem 11 hier beispielhaft auch eine durch den Fahrer betätigbare Eingabeeinrichtung 14 auf, in die der Fahrer des Fahrzeugs 3 einen von dem Fahrzeug 3 einzuhaltenden Abstand zwischen dem Fahrzeug 3 und einem vor dem Fahrzeug 3 auf der gleichen Fahrspur 4 fahrenden Vorderfahrzug 15 (Fig. 2) eingeben kann. Sofern ein Abstand in die Eingabeeinrichtung 14 eingegeben wird, wird die Geschwindigkeit des Fahrzeugs 3 mittels des Geschwindigkeit-Regelsystems 11 derart geregelt, dass das Fahrzeug 3 zumindest in etwa mit dem eingegebenen Abstand hinter dem Vorderfahrzeug 15 fährt. Zur Regelung der Geschwindigkeit weist das Geschwindigkeits-Regelsystem 11 dabei eine Abstands-Messeinrichtung 17 (Fig. 3) auf, mittels der der Abstand des Fahrzeugs 3 zu dem Vorderfahrzeug 15 gemessen wird.

Wie in Fig. 3 weiter gezeigt ist, weist das Fahrzeug 3 hier auch eine datenübertragend mit dem Geschwindigkeits-Regelsystem 11 gekoppelte bzw. verbundene Speichereinrichtung, hier beispielhaft ein Navigationsgerät 19 auf, in der Navigationsdaten gespeichert sind. Zudem weist das Fahrzeug 3 hier auch eine datenübertragend mit dem Geschwindigkeit-Regelsystem 1 verbundene Verkehrsschild-Erkennungseinrichtung 21 auf, mittels der auf in Fahrtrichtung 5 vor dem Fahrzeug 3 liegenden Verkehrsschildern angezeigte Geschwindigkeits-Informationen erkannt bzw. erfasst werden. Zur Erkennung bzw. Erfassung der auf den Verkehrsschildern angezeigten Geschwindigkeits-Informationen kann die Verkehrsschild-Erkennungseinrichtung 21 dabei beispielsweise wenigstens eine Kamera aufweisen.

Mittels der Geschwindigkeits-Informationen aus den Navigationsdaten und von der Verkehrsschild-Erkennungseinrichtung 21 kann das Geschwindigkeits-Regelsystem 11 ermitteln, ob das mittels des Geschwindigkeits-Regelsystems 11 geregelte Fahrzeug 3 die auf dem Fahrstreckenabschnitt, auf dem sich das Fahrzeug 3 gerade befindet, geltenden Geschwindigkeitsvorschriften einhält oder nicht. Hält das Fahrzeug 3 die geltenden Geschwindigkeitsvorschriften zur Zeit nicht ein oder wird das Fahrzeug 3 die geltenden Geschwindigkeitsvorschriften in Zukunft voraussichtlich nicht einhalten, wird die Geschwindigkeit des Fahrzeugs 3 mittels des Geschwindigkeit-Regelsystems 11 unter Berücksichtigung der geltenden Geschwindigkeitsvorschriften selbsttätig bzw. automatisch geändert. Auf diese Weise wird sichergestellt, dass die auf dem Fahrstreckenabschnitt geltenden Geschwindigkeitsvorschriften stets eingehalten werden. Bevorzugt wird die Geschwindigkeit des Fahrzeugs dabei unter Berücksichtigung wenigstens eines Fahrzeugparameters, beispielsweise Energieverbrauch und Bremsverschleiß des Fahrzeugs 3, geändert.

Sofern das Fahrzeug 3 daher bei den in den Fig. 1 und 2 gezeigten Fahrsituationen aufgrund der Regelung der Fahrzeuggeschwindigkeit mittels des Geschwindigkeits-Regelsystems 11 schneller fährt oder voraussichtlich fahren wird, als, in Fahrtrichtung 5 gesehen, nach den Verkehrsschildern 7 erlaubt ist, erkennt dies das Geschwindigkeits-Regelsystem 11. Die Geschwindigkeit des Fahrzeugs 3 wird dann mittels des Geschwindigkeits-Regelsystems 11 selbsttätig derart geregelt, dass das Fahrzeug 3 beim Erreichen der Verkehrsschilder 7 die auf den Verkehrsschildern 7 angezeigten Geschwindigkeitsvorschriften einhält.

Zusätzlich zu der selbsttätigen Änderung der Geschwindigkeit des Fahrzeugs 3 mittels des Geschwindigkeits-Regelsystems 11 kann dem Fahrer des Fahrzeugs 3 mittels einer in Fig. 3 mit gestrichelten Linien angedeuteten Anzeigeeinrichtung 25 auch angezeigt werden, dass das Fahrzeug 3 die geltenden Geschwindigkeitsvorschriften nicht einhält. Grundsätzlich könnte das Geschwindigkeits-Regelsystem 11 gemäß einer nicht-erfindungsgemäßen Variante auch eine in Fig. 3 ebenfalls mit gestrichelten Linien angedeutete, durch den Fahrer des Fahrzeugs 3 betätigbare Auswahleinrichtung 27 aufweisen, mittels der der Fahrer auswählen kann, ob mittels des Geschwindigkeits-Regelsystems 11 die Geschwindigkeit des Fahrzeugs 3 unter Berücksichtigung der geltenden Geschwindigkeitsvorschriften geändert werden soll oder nicht.

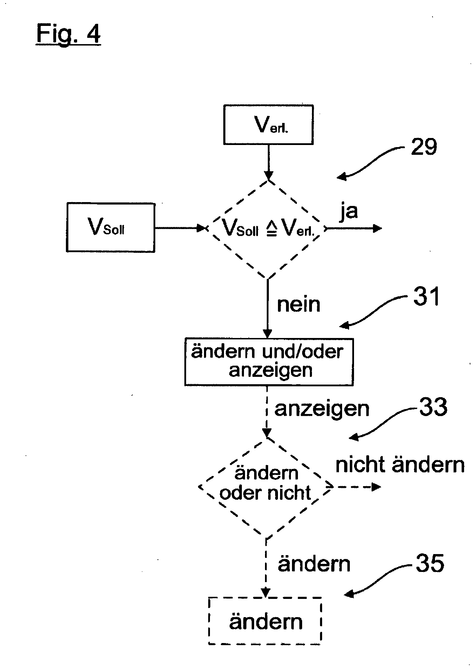

Im Folgenden wird die Funktionsweise des Geschwindigkeits-Regelsystems 11 anhand der Fig. 4 nochmals erläutert, wobei die Regelung der Geschwindigkeit hier beispielhaft in Abhängigkeit von einem durch den Fahrer in die Eingabeeinrichtung 13 eingegebenen Geschwindigkeitswert V_{SoII} erfolgt:
Sofern das Geschwindigkeits-Regelsystem 11 aktiviert ist wird zunächst in einem ersten Schritt 29 mittels des Geschwindigkeits-Regelsystems 11 ermittelt, ob der eingegebene Geschwindigkeitswert v_{SoII} der maximal erlaubten Geschwindigkeit entspricht. Ist der in die Eingabeeinrichtung 13 eingegebene Geschwindigkeitswert V_{SoII} größer als die maximal erlaubte Fahrzeuggeschwindigkeit _{Verl.}, wird in einem zweiten Schritt 31 der Geschwindigkeitswert V_{SoII} mittels des Geschwindigkeits-Regelsystems 11 selbsttätig zur Einhaltung der maximal erlaubte Fahrzeuggeschwindigkeit vₑᵣₗ. verringert. Ist der in die Eingabeeinrichtung 13 eingegebene Geschwindigkeitswert v_{Soll} kleiner als die maximal erlaubte Fahrzeuggeschwindigkeit vₑᵣₗ., wird in dem zweiten Schritt 31 der Geschwindigkeitswert v_{Soll} des Fahrzeugs 3 mittels des Geschwindigkeits-Regelsystems 11 selbsttätig unter Einhaltung der maximal erlaubten Fahrzeuggeschwindigkeit vₑᵣₗ. erhöht. Zusätzlich zu dieser selbsttätigen Änderung der Geschwindigkeit v_{Fzg.} kann dem Fahrer in dem zweiten Schritt 31 des Fahrzeugs 3 mittels der Anzeigeeinrichtung 25 angezeigt werden, dass der eingegebene Geschwindigkeitswert v_{Soll} nicht der maximal erlaubten Geschwindigkeit entspricht bzw. größer oder kleiner ist, als die maximal erlaubten Geschwindigkeit.

In einem optionalen, nicht-erfindungsgemäßen dritten Schritt 33 kann der Fahrer des Fahrzeugs 3 mittels der Auswahleinrichtung 27 auswählen, ob der eingegebene Geschwindigkeitswert v_{SoII} unter Berücksichtigung der maximal erlaubten Geschwindigkeit mittels des Geschwindigkeits-Regelsystems 11 geändert werden soll oder nicht. In einem vierten Schritt 35 wird der eingegebene Geschwindigkeitswert v_{Soll} mittels des Geschwindigkeits-Regelsystems 11 selbsttätig geändert.

### Bezugszeichenliste

- 1: Fahrstreckenabschnitt
- 3: Fahrzeug
- 4: Fahrspur
- 5: Fahrtrichtung
- 7: Verkehrsschild
- 11: Geschwindigkeits-Regelsystem
- 13: Eingabeeinrichtung
- 14: Eingabeeinrichtung
- 15: Vorderfahrzeug
- 17: Abstands-Messeinrichtung
- 19: Navigationsgerät
- 21: Verkehrsschild-Erkennungseinrichtung
- 25: Anzeigeeinrichtung
- 27: Auswahleinrichtung
- 29: erster Schritt
- 31: zweiter Schritt
- 33: dritter Schritt
- 35: vierter Schritt

- v_{Soll}: Fahrzeuggeschwindigkeit
- v_{ert.}: erlaubte maximale Fahrzeuggeschwindigkeit

## Patentansprüche

1. Verfahren zur Unterstützung eines Fahrers eines Fahrzeugs, insbesondere eines Nutzfahrzeugs, wobei ein Geschwindigkeits-Regelsystem (11) vorgesehen ist, mittels dem die Geschwindigkeit des Fahrzeugs (3) selbsttätig regelbar und/oder einstellbar ist, wobei das Geschwindigkeits-Regelsystem (11) datenübertragend mit einer Geschwindigkeits-Informationen über einen aktuell befahrenen Fahrstreckenabschnitt (1) aufweisenden Informationseinrichtung (19, 21) gekoppelt ist, wobei mittels des Geschwindigkeits-Regelsystems (11) ermittelt wird, ob das mittels des Geschwindigkeits-Regelsystems (11) geregelte Fahrzeug (3) auf dem Fahrstreckenabschnitt (1) geltende Geschwindigkeitsvorschriften aktuell und/oder zukünftig einhält, und dass, sofern das Fahrzeug (3) die geltenden Geschwindigkeitsvorschriften nicht einhält, mittels des Geschwindigkeits-Regelsystems (11) die Geschwindigkeit des Fahrzeuges (3) unter Berücksichtigung der geltenden Geschwindigkeitsvorschriften selbsttätig geändert wird, **dadurch gekennzeichnet, dass**, sofern mittels des Geschwindigkeits-Regelsystems (11) die Geschwindigkeit des Fahrzeuges (3) unter Berücksichtigung der geltenden Geschwindigkeitsvorschriften geändert wird, die Geschwindigkeit des Fahrzeuges (3) mittels des Geschwindigkeits-Regelsystems (11) unter Berücksichtigung des Energieverbrauchs und/oder des Bremsverschleißes des Fahrzeuges (3) geändert wird.

2. Verfahren nach Anspruch 1, **dadurch gekennzeichnet, dass** das Geschwindigkeits-Regelsystem (11) eine durch den Fahrer betätigbare Eingabeeinrichtung (13) aufweist, in die eine von dem Fahrzeug (3) einzuhaltende Geschwindigkeit eingegeben wird, und dass die Geschwindigkeit des Fahrzeuges (3) mittels des Geschwindigkeits-Regelsystems (11) derart regelbar und/oder einstellbar ist, dass die eingegebene Geschwindigkeit zumindest in etwa von dem Fahrzeug (3) eingehalten wird.

3. Verfahren nach Anspruch 1 oder 2, **dadurch gekennzeichnet, dass** das Geschwindigkeits-Regelsystem (11) eine Abstands-Messeinrichtung (17) aufweist, mittels der der Abstand des Fahrzeugs (3) zu einem, insbesondere auf der gleichen Fahrspur (4) fahrenden, vorausfahrenden Vorderfahrzeug (15) gemessen wird, und dass die Geschwindigkeit des Fahrzeugs (3) mittels des Geschwindigkeits-Regelsystems (11) derart regelbar und/oder einstellbar ist, dass das Fahrzeug (3) zumindest in etwa mit einem definierten Abstand hinter den Vorderfahrzeug (15) fährt, wobei bevorzugt vorgesehen ist, dass das Geschwindigkeits-Regelsystem (11) eine durch den Fahrer betätigbare Eingabeeinrichtung (14) aufweist, in die der Abstand eingegeben wird.

4. Verfahren nach einem der vorhergehenden Ansprüche, **dadurch gekennzeichnet, dass** die Informationseinrichtung (19, 21) als Speichereinrichtung ausgebildet ist, in der Navigationsdaten gespeichert sind, wobei bevorzugt vorgesehen ist, dass die Informationseinrichtung als Navigationsgerät ausgebildet ist.

5. Verfahren nach einem der vorhergehenden Ansprüche, **dadurch gekennzeichnet,** die Informationseinrichtung (19, 21) als Verkehrsschild-Erkennungseinrichtung ausgebildet ist, mittels der auf, insbesondere in Fahrtrichtung (5) vor dem Fahrzeug (3) liegenden, Verkehrsschildern (7) angezeigte Geschwindigkeits-Informationen erkannt und/oder erfasst werden, wobei bevorzugt vorgesehen ist, dass die Verkehrsschild-Erkennungseinrichtung wenigstens eine Kamera aufweist.

6. Vorrichtung zur Unterstützung eines Fahrers eines Fahrzeugs, wobei ein Geschwindigkeits-Regelsystem (11) vorgesehen ist, mittels dem die Geschwindigkeit des Fahrzeugs (3) selbsttätig regelbar und/oder einstellbar ist, wobei das Geschwindigkeits-Regelsystem (11) datenübertragend mit einer Geschwindigkeits-Informationen über einen aktuell befahrenen Fahrstreckenabschnitt (1) aufweisenden Informationseinrichtung (19, 21) gekoppelt ist, wobei mittels des Geschwindigkeits-Regelsystems (11) ermittelbar ist, ob das mittels des Geschwindigkeits-Regelsystems (11) geregelte Fahrzeug (3) auf dem Fahrstreckenabschnitt (1) geltende Geschwindigkeitsvorschriften aktuell und/oder zukünftig einhält, und wobei, sofern das Fahrzeug (3) die geltenden Geschwindigkeitsvorschriften nicht einhält, mittels des Geschwindigkeits-Regelsystems (11) die Geschwindigkeit des Fahrzeuges (3) unter Berücksichtigung der geltenden Geschwindigkeitsvorschriften selbsttätig änderbar ist, **dadurch gekennzeichnet, dass**, sofern mittels des Geschwindigkeits-Regelsystems (11) die Geschwindigkeit des Fahrzeugs (3) unter Berücksichtigung der geltenden Geschwindigkeitsvorschriften änderbar ist, die Geschwindigkeit des Fahrzeuges (3) mittels des Geschwindigkeits-Regelsystems (11) unter Berücksichtigung des Energieverbrauchs und/oder Bremsverschleißes des Fahrzeuges änderbar ist.

7. Vorrichtung nach Anspruch 6, **dadurch gekennzeichnet, dass** das Geschwindigkeits-Regelsystem (11) eine durch den Fahrer betätigbare Eingabeeinrichtung (13) aufweist, in die eine von dem Fahrzeug (3) einzuhaltende Geschwindigkeit eingebbar ist, und dass die Geschwindigkeit des Fahrzeuges (3) mittels des Geschwindigkeits-Regelsystems (11) derart regelbar und/oder einstellbar ist, dass die eingegebene Geschwindigkeit zumindest in etwa von dem Fahrzeug (3) einhaltbar ist.

8. Vorrichtung nach Anspruch 6 oder 7, **dadurch gekennzeichnet, dass** das Geschwindigkeits-Regelsystem (11) eine Abstands-Messeinrichtung (17) aufweist, mittels der der Abstand des Fahrzeugs (3) zu einem, insbesondere auf der gleichen Fahrspur (4) fahrenden, vorausfahrenden Vorderfahrzeug (15) messbar ist, und dass die Geschwindigkeit des Fahrzeuges (3) mittels des Geschwindigkeits-Regelsystems (11) derart regelbar und/oder einstellbar ist, dass das Fahrzeug (3) zumindest in etwa mit einem definierten Abstand hinter den Vorderfahrzeug (15) fährt, wobei bevorzugt vorgesehen ist, dass das Geschwindigkeits-Regelsystem (11) eine durch den Fahrer betätigbare Eingabeeinrichtung (14) aufweist, in die der Abstand eingebbar ist.

9. Vorrichtung nach einem der Ansprüche 6 bis 8, **dadurch gekennzeichnet, dass** die Informationseinrichtung (19, 21) als Speichereinrichtung ausgebildet ist, in der Navigationsdaten gespeichert sind, wobei bevorzugt vorgesehen ist, dass die Informationseinrichtung als Navigationsgerät ausgebildet ist.

10. Vorrichtung nach einem der Ansprüche 6 bis 9, **dadurch gekennzeichnet,** die Informationseinrichtung (19, 21) als Verkehrsschild-Erkennungseinrichtung ausgebildet ist, mittels der auf, insbesondere in Fahrtrichtung (5) vor dem Fahrzeug (3) liegenden, Verkehrsschildern (7) angezeigte Geschwindigkeits-Informationen erkennbar und/oder erfassbar sind, wobei bevorzugt vorgesehen ist, dass die Verkehrsschild-Erkennungseinrichtung wenigstens eine Kamera aufweist.

11. Fahrzeug, insbesondere Nutzfahrzeug, bei dem ein Verfahren nach einem der Ansprüche 1 bis 5 durchgeführt wird, und/oder mit einer Vorrichtung nach einem der Ansprüche 6 bis 10.

## Claims

1. Method for assisting a driver of a vehicle, in particular a commercial vehicle, wherein a speed control system (11) is provided, by means of which the speed of the vehicle (3) can be automatically controlled and/or set, wherein the speed control system (11) is coupled in a data-transmitting manner to an information device (19, 21) having speed information about the section of road (1) being driven at the time, wherein it is determined by means of the speed control system (11) whether the vehicle (3) controlled by means of the speed control system (11) is at the time observing the applicable speed limits and/or will in the future observe the applicable speed limits, and that, if the vehicle (3) is not observing the applicable speed limits, the speed of the vehicle (3) is automatically changed by means of the speed control system (11) while taking into account the applicable speed limits, **characterized in that**, if the speed of the vehicle (3) is changed by means of the speed control system (11), the speed of the vehicle (3) is changed by means of the speed control system (11) while taking into account the energy consumption and/or the brake wear of the vehicle (3).

2. Method according to Claim 1, **characterized in that** the speed control system (11) has an input device (13), which can be actuated by the driver and into which a speed to be observed by the vehicle (3) is input, and **in that** the speed of the vehicle (3) can be controlled and/or set by means of the speed control system (11) in such a way that the input speed is at least approximately observed by the vehicle (3).

3. Method according to Claim 1 or 2, **characterized in that** the speed control system (11) has a distance measuring device (17), by means of which the distance of the vehicle (3) from a vehicle in front (15) driving ahead, in particular driving in the same lane (4), is measured, and **in that** the speed of the vehicle (3) can be controlled and/or set by means of the speed control system (11) in such a way that the vehicle (3) drives at least approximately at a defined distance behind the vehicle in front (15), wherein it is preferably provided that the speed control system (11) has an input device (14), which can be actuated by the driver and into which the distance is input.

4. Method according to one of the preceding claims, **characterized in that** the information device (19, 21) is designed as a storage device, in which navigation data are stored, wherein it is preferably provided that the information device is designed as a navigation system.

5. Method according to one of the preceding claims, **characterized in that** the information device (19, 21) is designed as a traffic sign recognition device, by means of which speed information displayed on traffic signs (7), in particular lying ahead of the vehicle (3) in the direction of travel (5), are recognized and/or detected, wherein it is preferably provided that the traffic sign recognition device has at least one camera.

6. Device for assisting a driver of a vehicle, wherein a speed control system (11) is provided, by means of which the speed of the vehicle (3) can be automatically controlled and/or set, wherein the speed control system (11) is coupled in a data-transmitting manner to an information device (19, 21) having speed information about the section of road (1) being driven at the time, wherein it can be determined by means of the speed control system (11) whether the vehicle (3) controlled by means of the speed control system (11) is at the time observing the applicable speed limits and/or will in the future observe the applicable speed limits, and wherein, if the vehicle (3) is not observing the applicable speed limits, the speed of the vehicle (3) can be automatically changed by means of the speed control system (11) while taking into account the applicable speed limits, **characterized in that**, if the speed of the vehicle (3) can be changed by means of the speed control system (11), the speed of the vehicle (3) can be changed by means of the speed control system (11) while taking into account the energy consumption and/or the brake wear of the vehicle (3).

7. Device according to Claim 6, **characterized in that** the speed control system (11) has an input device (13), which can be actuated by the driver and into which a speed to be observed by the vehicle (3) can be input, and **in that** the speed of the vehicle (3) can be controlled and/or set by means of the speed control system (11) in such a way that the input speed can be at least approximately observed by the vehicle (3).

8. Device according to Claim 6 or 7, **characterized in that** the speed control system (11) has a distance measuring device (17), by means of which the distance of the vehicle (3) from a vehicle in front (15) driving ahead, in particular driving in the same lane (4), can be measured, and **in that** the speed of the vehicle (3) can be controlled and/or set by means of the speed control system (11) in such a way that the vehicle (3) drives at least approximately at a defined distance behind the vehicle in front (15), wherein it is preferably provided that the speed control system (11) has an input device (14), which can be actuated by the driver and into which the distance can be input.

9. Device according to one of Claims 6 to 8, **characterized in that** the information device (19, 21) is designed as a storage device, in which navigation data are stored, wherein it is preferably provided that the information device is designed as a navigation system.

10. Device according to one of Claims 6 to 9, **characterized in that** the information device (19, 21) is designed as a traffic sign recognition device, by means of which speed information displayed on traffic signs (7), in particular lying ahead of the vehicle (3) in the direction of travel (5), can be recognized and/or detected, wherein it is preferably provided that the traffic sign recognition device has at least one camera.

11. Vehicle, in particular a commercial vehicle, in which a method according to one of Claims 1 to 5 is carried out, and/or with a device according to one of Claims 6 to 10.

## Revendications

1. Procédé d'assistance d'un conducteur de véhicule, notamment de véhicule utilitaire, un système de régulation de vitesse (11) étant prévu qui permet de réguler et/ou régler automatiquement la vitesse du véhicule (3), le système de régulation de vitesse (11) étant accouplé en transmission de données à un moyen d'information (19, 21) qui comporte des informations de vitesse relatives à une portion d'itinéraire (1) actuellement parcourue, le système de régulation de vitesse (11) permettant de déterminer si le véhicule (3) régulé à l'aide du système de régulation de vitesse (11) sur la portion d'itinéraire (1) est conforme aux réglementations de vitesse actuelles et/ou futures, et que, à condition que le véhicule (3) ne respecte pas les réglementations de vitesse applicables, la vitesse du véhicule (3) est automatiquement modifiée à l'aide du système de régulation de vitesse (11) avec prise en compte des réglementations de vitesse applicables, **caractérisé en ce que**, à condition que la vitesse du véhicule (3) soit modifiée avec prise en compte des réglementations de vitesse applicables à l'aide du système de régulation de vitesse (11), la vitesse du véhicule (3) est modifiée à l'aide du système de régulation de vitesse (11) avec prise en compte de la consommation d'énergie et/ou de l'usure des freins du véhicule (3).

2. Procédé selon la revendication 1, **caractérisé en ce que** le système de régulation de vitesse (11) comporte un moyen d'entrée (13) qui peut être actionné par le conducteur et dans lequel est entrée une vitesse que le véhicule (3) doit maintenir, et **en ce que** la vitesse du véhicule (3) peut être régulée et/ou réglée à l'aide du système de régulation de vitesse (11) de telle manière que la vitesse entrée soit au moins approximativement maintenue par le véhicule (3).

3. Procédé selon la revendication 1 ou 2, **caractérisé en ce que** le système de régulation de vitesse (11) comporte un moyen de mesure de distance (17) qui permet de mesurer la distance du véhicule (3) à un véhicule précédent (15) qui roule devant, notamment sur la même voie de roulement (4), et **en ce que** la vitesse du véhicule (3) peut être régulée et/ou réglée à l'aide du système de régulation de vitesse (11) de telle sorte que le véhicule (3) roule au moins approximativement à une distance définie derrière le véhicule précédent (15), le système de régulation de vitesse (11) étant de préférence prévu pour comporter un moyen d'entrée (14) qui peut être actionné par le conducteur et dans lequel la distance est entrée.

4. Procédé selon l'une des revendications précédentes, **caractérisé en ce que** le moyen d'information (19, 21) est conçu comme un moyen de mémorisation dans lequel sont mémorisées des données de navigation, le moyen d'information étant de préférence prévu pour être conçu comme un appareil de navigation.

5. Procédé selon l'une des revendications précédentes, **caractérisé en ce que** le moyen d'information (19, 21) est conçu comme un moyen de reconnaissance de panneaux de signalisation qui permet de reconnaître et/ou détecter des informations de vitesse indiquées sur les panneaux de signalisation (7) situés devant le véhicule (3) notamment dans le sens de circulation (5), le moyen de reconnaissance de panneaux de signalisation étant de préférence prévu pour comporter au moins une caméra.

6. Dispositif d'assistance du conducteur d'un véhicule, un système de régulation de vitesse (11) étant prévu qui permet de réguler et/ou de régler automatiquement la vitesse du véhicule (3), le système de régulation de vitesse (11) étant accouplé en transmission de données à un moyen d'information (19, 21) qui comporte des informations de vitesse relatives à une portion d'itinéraire (1) actuellement parcourue, le système de régulation de vitesse (11) permettant de déterminer si le véhicule (3) régulé à l'aide du système de régulation de vitesse (11) sur la portion d'itinéraire (1) est conforme aux réglementations de vitesse actuelles et/ou futures, et, à condition que le véhicule (3) ne respecte pas les réglementations de vitesse applicables, la vitesse du véhicule (3) pouvant être automatiquement modifiée à l'aide du système de régulation de vitesse (11) avec prise en compte des réglementations de vitesse applicables, **caractérisé en ce que**, à condition que la vitesse du véhicule (3) puisse être modifiée avec prise en compte des réglementations de vitesse applicables à l'aide du système de régulation de vitesse (11), la vitesse du véhicule (3) peut être modifiée à l'aide du système de régulation de vitesse (11) avec prise en compte de la consommation d'énergie et/ou de l'usure des freins du véhicule.

7. Dispositif selon la revendication 6, **caractérisé en ce que** le système de régulation de vitesse (11) comporte un moyen d'entrée (13) qui peut être actionné par le conducteur et dans lequel peut être entrée une vitesse que le véhicule (3) doit maintenir, et **en ce que** la vitesse du véhicule (3) peut être régulée et/ou réglée à l'aide du système de régulation de vitesse (11) de telle manière que la vitesse entrée puisse être maintenue au moins approximativement par le véhicule (3).

8. Dispositif selon la revendication 6 ou 7, **caractérisé en ce que** le système de régulation de vitesse (11) comporte un moyen de mesure de distance (17) qui permet de mesurer la distance du véhicule (3) à un véhicule précédent (15) qui roule devant, notamment sur une même voie de roulement (4), et **en ce que** la vitesse du véhicule (3) peut être régulée et/ou réglée à l'aide du système de régulation de vitesse (11) de telle sorte que le véhicule (3) roule au moins approximativement à une distance définie derrière le véhicule précédent (15), le système de régulation de vitesse (11) étant de préférence prévu qui comporte un moyen d'entrée (14) qui peut être actionné par le conducteur et dans lequel la distance peut être entrée.

9. Dispositif selon l'une des revendications 6 à 8, **caractérisé en ce que** le moyen d'information (19, 21) est conçu comme un moyen de mémorisation dans lequel sont mémorisées des données de navigation, le moyen d'information étant de préférence prévu pour être conçu comme un appareil de navigation.

10. Dispositif selon l'une des revendications 6 à 9, **caractérisé en ce que** le moyen d'information (19, 21) est conçu comme un moyen de reconnaissance de panneaux de signalisation qui permet de reconnaître et/ou détecter des informations de vitesse indiquées sur les panneaux de signalisation (7) situés devant le véhicule (3) notamment dans le sens de circulation (5), le moyen de reconnaissance de panneaux de signalisation étant de préférence prévu pour comporter au moins une caméra.

11. Véhicule, notamment véhicule utilitaire, dans lequel un procédé selon l'une des revendications 1 à 5 est mis en oeuvre et/ou qui comprend un dispositif selon l'une des revendications 6 à 10.
